# EUROPEAN PATENT SPECIFICATION

(11) **EP 2 585 635 B1**
(45) Date of publication and mention of the grant of the patent: **17.09.2014**
(21) Application number: 11729945.3
(22) Date of filing: 22.06.2011
(51) Int. Cl.: D21H 19/08, D21H 19/66, D21H 19/82, D06M 11/83, D06Q 1/04, D06P 1/00, D06P 1/642, D21H 21/30, D06P 5/20, G01N 21/00, G01N 21/64, G09F 3/04, G01N 21/84

(54) **METHOD FOR PRODUCING COATED VACUUM METALLIZED SUBSTRATES**
VERFAHREN ZUR HERSTELLUNG VON BESCHICHTETEN VAKUUMMETALLISIERTEN SUBSTRATEN
PROCÉDÉ POUR LA PRODUCTION DE SUBSTRATS MÉTALLISÉS SOUS VIDE REVÊTUS

(30) Priority: 25.06.2010 NL 2004974
(43) Date of publication of application: 01.05.2013
(73) Proprietor: AR Metallizing N.V., 3600 Genk (BE)
(72) Inventor: PRINCEN, Hugo, "deceased" (BE); GIELEN, Paula, 3740 Bilzen (BE)
(74) Representative: Krebs, Achim
(86) International application number: PCT/EP2011/060415
(87) International publication number: WO 2011/161142

(56) References cited:
- US-A- 3 677 792
- US-A1- 2007 281 570
- DATABASE WPI Week 198332 Thomson Scientific, London, GB; AN 1983-731338 XP002660197, & JP 58 109665 A (OIKE KASEI MIZUHIKI) 30 June 1983 (1983-06-30)

## Description

The present invention relates to metalized substrates, more specifically to non-woven sheet like materials, such as paper having an overprintable topcoat layer applied to the metallic layer.

### Background of the Invention

Metallization of woven or non-woven materials, such as textiles, paper, foils or other sheet-like material in a high vacuum metallization chamber is a well known process. These materials often serve as basis for further printing, e.g. for labels or decorative packaging. Usually, an overprintable topcoat is applied to the metallised substrate, such as described in US3,677,792, or WO00/77300.

The overprinting process is quite complicated, and involves interactions between ink, printing substrate and printing plates or cylinders. Even minute variations of the substrate surface can affect the subsequent printing process, leading to wetting and appearance issues as well as performance issues of e.g. labels.

Specifically local variations in coating film thickness or inhomogeneities, e.g. wetting issues such as pin holes or other surface deformations may interact with the liquid ink film during printing, resulting in defects and colour deviations. Furthermore, solvents in the ink may penetrate into the metal layer, causing oxidation and/or delamination.

These variations are usually due to contaminations that affect either the metallisation or coating process, such as dust particles; contamination with surface active chemicals, e.g. soaps, silicones or waxes which may affect coating homogeneity at an extremely low concentration. These problems are usually further enhanced when environmentally friendly solutions are applied, such as water based or high solids base- or topcoats. Moreover, due to the low dry thickness of the top coats of typically below 1 µm, physical or optical inspection possibilities are very limited, if not impossible.

Accordingly, a problem with the application of topcoats as disclosed resides in the fact that the coating homogeneity is difficult to ensure, in particular due to the fact the underlying metal layer is highly reflective, making it difficult to see differences in the coating thickness or other inhomogeneities with the naked eye or other simple processes, this is even more enhance with paper products, where the metalized layer and the topcoats are applied to large paper rolls at high throughput operation.

### SUMMARY OF THE INVENTION

The present invention relates to a process for preparing a metallised and overprintably top coated sheet-like woven or non-woven material substrate composed of fibrous material such as tissue, paper, cardboard, or non-woven fabric, comprising the steps of: a) depositing on the substrate a metal layer by vacuum deposition, and b) applying a printable coating on the metalized substrate obtained in a), wherein the coating comprises a fluorescent agent. In a second aspect, the present invention also relates to the products obtainable in this process, and to their use in labelling of beverage bottles.

In the subject process, the substrate is usually composed of a base layer and a base coat to ensure the smoothness of the substrate surface prior to the metallization process. The process according to the invention is particularly suitable for the processing of sheet-like woven or non-woven materials composed of fibrous material such as tissue, paper, cardboard or woven or nonwoven fabric. The shape of the substrates according to the present invention preferably is in the form of a sheet material, such as for example a film or paper sheet.

Typical substrates include one-side coated papers, siliconized papers, craft papers as well as uncoated, highly calendered papers.

The substrate is then typically prepared by a high vacuum metallization process to coat the exposed substrate surface with a thin metallic surface of a metal. In this vacuum metalizing process the metal is vaporized and deposited on the substrate. Aluminium is particularly well suited for this invention, but other metals such as silver, tin, zinc, gold, platinum, titanium, gold, lead, nickel and tantalum, as well as alloys such as chromium titanium may also preferably be employed.

The metallic layer may serve a number of functions. Principally, it has a decorative purpose, since it creates a brilliant metallic surface. Print coats may be applied to the surface of the metallic layer to enhance its printability, and the metallic layer may also be overprinted with indicia or designs.

The deposited metal adheres to the surface of the substrate being metallised, and the resulting metal coating thickness typically is in a range of from 250-300 Angstroms, but may generally be in the range of from 0.01 to 0.2 µm.

Since the metal layer is very thin, the substrate surface is preferably pre-coated with a base coating which fills minor surface imperfections and provides a smooth surface to receive the metal deposit.

Accordingly, the present process preferably involves pre-coating the substrate surface with solvent-based or aqueous dispersions prior to the metallization step, as disclosed in US 3,113,888, or otherwise ensuring the smoothness of the surface, and good adhesion of the metal layer.

The coatings deployed as pre- and preferably also as topcoat according to the present invention may be solvent based, typically co-polymers of methyl and butylacrylate, diluted with solvents like ethylacetate. Typical solvent based top coats have a solids content of between 15 and 65%wt., based on the total liquid coatings composition, preferably of from 25 and 50%wt., most preferably of from 30 to 45 wt.%. Water-based coatings may preferably comprise styrene acrylic copolymers latex dispersions in water.

Alternatives to, or combinations with pre-coating of the paper involve lamination or extrusion of a thermoplastic film onto a fibrous material such as tissue, paper or cardboard prior to the vacuum metalizing step, as disclosed in EP-A-0074998 or WO2004005026. Other pre-treatments preferably include corona treatments to enhance adhesion.

The resulting metal-coated substrates are prone to oxidation, thus causing adherence problems in subsequent treatments and applications, for instance label printing. Furthermore, the surface is prone to scratching or damages.

Accordingly, in order to convert the metallised substrate into an overprintable substrate, a topcoat, mostly a clear coat, is commonly applied to the metallised substrate. Suitable clear coats are for instance disclosed in US3,677,792 and WO00/77300.

Preferably, the metallised substrate may be subjected to calendaring to increase smoothness prior to, after the base coat application, or after the metallization step.

The top coat may be a solvent based coating, a water based coating or otherwise based coating. The topcoat is chosen such that it preferably does not affect the metal layer, the base coat, or the substrate in any significant way, thus avoiding for instance delamination or corrosion of the metal layer.

The application process of the coating to a substrate is preferably done by means of one or more optionally engraved cylinder in specialized, high-speed machine, ensuring the right amount of drying energy and humidification steps are applied to the substrate. The machines used corona treatment to regulate the surface energy of the substrate prior to coating. The engraved cylinder(s) are preferably housed in a closed chamber, in overpressure, and advantageously use doctor blades for the application. The application may be performed in a single, double, or multiple layers, preferably in a single or double layer.

The topcoat must satisfy the requirements for the vacuum deposition process and provide the mechanism for building into the sheet physical characteristics that result in a final sheet having the desired characteristics of good appearance, high gloss, high metal adhesion, satisfactory printability, high wet rub, high dry and wet flexibility, and other factors such as low wet expansivity, curl stability, corrosion resistance, excellent ink retention, and/or short wash off/ deglueing. Yet further, the topcoat should be overprintable, i.e. allow application of printing inks in any suitable printing process, without causing compatibility issues or defaults, such as wetting problems. The overprintability of topcoats is an important issue in the area of packaging and labelling in applications such as ink printing, hot foil stamping and thermal transfer printing. Clear coats usually applied for metallized substrates are known to be difficult to overprint, due to the inherent low surface tension, and the potential presence of waxes and silicone additives as flowing aids and/or defoamers in the formulations. Accordingly, the top coat employed in the present process is overprintable, i.e. providing good adhesion to inks when printed onto the topcoat and properly cured, and substantially without surface defects. The terms "printable" and "overprintable" are used exchangeably with respect to the subject invention herein.

According to the present invention, the top coat comprises a fluorescent agent. This fluorescent agent preferably is excitable by ultraviolet radiation to emit visible light, or ultraviolet light of a longer wavelength than the exciting wavelength.

The top coat typically has a dry thickness of between 1 µm and 0.5 µm, preferably less than 0.95, more preferably less than 0.9 µm, and most preferably less than 0.85 µm. The top coat preferably has a dry thickness of at least 0.5 µm, more preferably at least 0.6 µm, and most preferably at least 0.7 µm. The homogeneity of such coatings was particularly difficult to control, since the low thickness of the coating does not result in any easily visible or easily perceptible difference in the e.g. the refractive index, as compared for instance to automotive clear coats. The top coat typically is applied at a solids content of between 0.5 and 1 g/m², preferably between 0.6 and 0.9 g/m², more preferably between 0.65 and 0.85 g/m².

Any fluorescent agent that is suitable for the subject process may be employed. Preferably, agents that provide strong fluorescence in low quantities and of low biological toxicity are employed in the process of the invention. Preferably, the fluorescent agent is an organic compound, since this allows a regular distribution in the top coats a compared to inorganic pigments which may be subject to settling or otherwise inhomogeneous distribution in the mixing and application process. Organic fluorescent agents may advantageously be dissolved in solvent based top coat compositions, while the use in water based top coats may advantageously involve solution in the organic phase prior to the dispersion process, or addition at the polymerisation stage in the case of e.g. latex top coats.

More preferably, the fluorescent agent comprises one or more compounds selected from benzoxazolines, biphenyl-stilbenes, triazine-stilbenes, diazoles, triazoles, coumarins and/or imidazolines, such as those disclosed in Ullmann's Encyclopaedia of Industrial Chemistry, Vol 17, p. 459-472 (1979). The fluorescent agent preferably comprises one or more compounds that absorbs ultraviolet light in the 300-500 nm range, and reemits it as visible light at the blue end of the visible spectrum as a result of fluorescence. Benzoxazoline fluorescence agents are particularly preferred when employing acrylic solvent based top coats.

Without wishing to be bound to any particular theory, it is believed that when exposed to light in the 300-500 nm range, the fluorescent agent molecules are excited to higher energy levels, and will return to their original unexcited state by emission of radiation in the visible light spectrum.

Generally, the fluorescence agent is present in an amount of from 0.01 to 0.1 %wt, more preferably 0.015-0.05%wt., and most preferably of from 0.02 to 0.04 %wt, based on the total amount of the total coating composition comprising binder, fluorescent agent and any other additives, as well as solvents. The amount of fluorescence agent is advantageously chosen such that the fluorescence may be detected, but such that it does not interfere negatively with other relevant coating properties. While the use of fluorescence agents has been disclosed for paper sizing where the perception of the paper brightness is improved by the blue tint of the emitted radiation, the use in a topcoat for a metallised substrate with its inherent high gloss and high reflection is however considered novel and inventive. Moreover, the amounts of fluorescent agent are preferably chosen such that they will allow inspection under a suitable light source with appropriate light emission, while the exposure to normal daylight should not result in a visible or perceptible emission, which may otherwise affect the colour aspect of the metallised substrate. Preferably, the amount of the fluorescence agent is in between 0.0001 g/m² and 0.001 g/m², more preferably between 0.0002 g/m² and 0.0009 g/m², yet more preferably between 0.0003 g/m² and 0.0008 g/m², and again more preferably between 0.0004 g/m² and 0.0007 g/m².

Accordingly, the present invention further relates to the use of a fluorescence agent in a top coat for a metallised substrate, preferably a sheet like substrate, for the control of the coating quality and/or application process continuity. Yet further, a blend of at least two fluorescent agents maybe employed, which should also allow determining the origin of a batch, e.g., varying emission strength after excitation on two different wave lengths. Variation and combinations of the fluorescent agent s and their concentrations in such a binary or higher combination preferably allows to determine production batches and may ensure counterfeiting control, for instance by absorbing light different wavelengths, and emitting light with distinctive radiation patterns.

The control of the top coating quality and homogeneity, as well as coating thickness may be as simple as visual inspection of samples under a black light. The amount of fluoresced light is linear with respect to the amount of material present as long as the layer is thin. As the layer thickness increases, the amount of light to thickness relationship becomes non-linear.

Preferably, the present invention also offers the possibility to automate the process further, by establishing an apparatus that measures for a predefined area the fluorescence and its homogeneity of the coated substrate.

According to one embodiment of the invention, metallised paper sheet materials are produced with superior appearance and performance characteristics which can be tailored to specific end use applications.

For example, the metallised paper can be produced with a very shiny, high gloss surface appearance, and/or a high quality metallised layer free of defects or pinholes, and/or an outer surface which is highly receptive to printing. The process according top the present invention further advantageously permits to recognise process related defects, such as impact of pollution of the cylinders, potential corona malfunctioning and others, which can be detected easily.

The present invention also relates to the product obtainable by the subject process, i.e. a metalized product comprising a base substrate, a metallic layer deposited directly onto the surface of the substrate or onto a based coat layer, and a topcoat layer applied onto the surface of the metal layer, wherein the topcoat comprises a fluorescent agent.

The product may advantageously be subjected to other processing, depending on the desired end use; for example, lamination to a heavier board, or coated with pressure sensitive adhesive to form pressure sensitive labels.

The finished metalized product may also be used as a packaging wrap or as a backing material, label or reflective insulator.

The metallic layer may also be overprinted with indicia or designs or may be selectively removed to create such designs or indicia. The metallised product can also be laminated to heavier board or coated with pressure sensitive adhesive to form pressure sensitive labels. Accordingly, the process according to the present invention further preferably comprises the step c) of overprinting the topcoat with indicia or designs. The process according to the present invention further preferably comprises step d) of cutting the overprinted substrate to form labels. The process according to the present invention also preferably comprises the step of applying an adhesive composition on the non-metalized surface of the substrate. Such labels can be employed for a variety of applications. However preferably they are used for beverages, such as beer or soft drinks where the appearance of the labels is very important, as well as the possibility to wash the labels of when bottles are recycled for reuse. Accordingly, the process according to the present invention further preferably comprises the step of attaching the label to a beverage bottle.

The present invention further relates to a process for the control of coating homogeneity of a metalized coated substrate, comprising exciting the coating comprising a fluorescent agent with ultraviolet radiation of a first wavelength based on the excitation characteristics of the fluorescent agent present in the coating to cause the coating to emit a light of a longer wavelength than the exciting radiation; and detecting the radiation of the emitted light from the coating by inspection or by measurement of the emitted light.
The present invention further relates to the use of a fluorescence agent in a top coat of a metalized coated substrate for the control of the coating homogeneity, control of the coating process continuity and/or batch control and anti-counterfeiting. Variation of fluorescence agents over time, or combinations of two or more fluorescence agents with absorption and remittance at different wavelengths may advantageously allow for instance for batch control of counterfeiting control in the case of e.g. production, delaminating or label removal bath contamination problems that may occur at the beverage bottling or bottle recycling stage, which are otherwise difficult to trace.

While the present invention has been described with reference to specific preferred embodiments, it should be appreciated that variations are possible without departing from the scope of the invention. Therefore, the invention is not intended to be limited by the description in the specification but only by the language of the claims and equivalents thereof.

## Claims

1. A process for preparing a metallised and overprintably top coated sheet-like woven or non-woven material substrate comprising fibrous material such as tissue, paper, cardboard, or nonwoven fabric, comprising the steps of:
a) depositing on a substrate a metal layer by vacuum deposition, and
b) applying an overprintable coating on the metallised substrate obtained in a), wherein the coating comprises a fluorescent agent.

2. A process according to claims 1, further comprising the step c) of overprinting the topcoat with indicia or designs.

3. A process according to claim 2, further comprising the step d) of cutting the overprinted substrate to form labels.

4. A process according to anyone of the previous claims, further comprising the step of applying an adhesive composition on the non-metalized surface of the substrate.

5. A process according to claims 3 or 4, further comprising attaching the label to a beverage bottle.

6. A process according to any one of the previous claims, wherein the fluorescent agent is excitable by ultraviolet radiation to emit visible light, or ultraviolet light of a longer wavelength than the exciting wavelength.

7. A process according to any one of the previous claims, wherein the fluorescent agent comprises one or more of benzoxazoline, biphenyl-stilbene, triazine-stilbene, diazole, triazole, coumarin and/or imidazoline.

8. A process according to any one of the previous claims, wherein the fluorescent agent is present in an amount of from 0.01 to 0.1 %wt, based on the total liquid coating composition.

9. A process according to any one of the previous claims, wherein the substrate includes one-side coated papers, siliconized papers, craft papers as well as uncoated, highly calendered papers.

10. A process according to claim 9, wherein the substrate is prepared by a high vacuum metallization process to coat the exposed substrate surface with a thin metallic surface of a metal, and wherein the metal is vaporized and deposited on the substrate.

11. A process according to any one of the previous claims, wherein the metal is selected from the group of aluminium, silver, tin, zinc, gold, platinum, titanium, gold, lead, nickel and tantalum, and/or alloys or combinations thereof.

12. A metalized and top coated substrate obtainable by the process according to any one of claims 1 to 11.

13. A process for the control of the coating homogeneity of a metalized coated substrate according to claim 12, comprising exciting the coating comprising a fluorescent agent with ultraviolet radiation of a first wavelength based on the excitation characteristics of the fluorescent agent present in the coating to cause the coating to emit a light of a longer wavelength than the exciting radiation; and detecting the radiation of the emitted light from the coating by inspection or by measurement of the emitted light.

14. Use of a fluorescence agent in a top coat of a metalized coated substrate according to claim 12 for the control of the coating homogeneity, control of the coating process continuity and/or batch control and anti-counterfeiting.

## Patentansprüche

1. Verfahren zur Herstellung eines metallisierten und überdruckbaren, mit einer Decklacklage beschichteten folienartigen Gewebes oder Vliesstoffsubstrates, das aus Fasermaterial, wie Gewebe, Papier, Pappe oder Vliesstoff besteht, umfassend die Schritte des:
a) Aufbringens einer Metallschicht auf das Substrat durch Vakuumabscheidung , und
b) Aufbringens einer überdruckbaren Decklacklage auf das metallisierte Substrat welches in a) erhalten wurde, wobei die Decklacklage ein Fluoreszenzmittel enthält.

2. Verfahren nach Anspruch 1, welches ferner den Schritt c) des Überdruckens der Decklackschicht mit Markierungen oder Designs umfasst.

3. Verfahren nach Anspruch 2, ferner umfassend den Schritt d) des Schneidens des Substrates zu überdruckten Etiketten.

4. Verfahren nach einem der vorhergehenden Ansprüche, ferner umfassend den Schritt des Auftragens einer Klebstoffzusammensetzung auf der nichtmetallisierten Oberfläche des Substrates.

5. Verfahren nach einem der Ansprüche 3 oder 4, ferner umfassend das Anbringen des Etikettes an einer Getränkeflasche.

6. Verfahren nach einem der vorhergehenden Ansprüche, wobei das Fluoreszenzmittel durch UV-Strahlung erregbar ist, um sichtbares Licht, oder UV-Licht einer längeren Wellenlänge als der Anregungswellenlänge zu emittieren.

7. Verfahren nach einem der vorhergehenden Ansprüche, wobei das Fluoreszenzmittel einen oder mehrere von Benzoxazolin, Biphenylstilben, Triazinstilben, Diazol, Triazol , Cumarin und / oder Imidazolin umfasst.

8. Verfahren nach einem der vorhergehenden Ansprüche, wobei das Fluoreszenzmittel in einer Menge von 0,01 bis 0,1 Gew. % vorhanden ist, bezogen auf die gesamte flüssige Beschichtungszusammensetzung.

9. Verfahren nach einem der vorhergehenden Ansprüche, wobei das Substrat einseitig gestrichene Papiere, silikonisierte Papiere, Kraftpapiere sowie unbeschichtete, stark kalandrierte Papiere einschließt.

10. Verfahren nach Anspruch 9, wobei das Substrat durch ein Hochvakuummetallisierungsverfahren zur Beschichtung der freiliegenden Substratoberfläche mit einer dünnen metallischen Oberfläche aus einem Metall hergestellt ist, und wobei das Metall verdampft und auf dem Substrat abgeschieden wird.

11. Verfahren nach einem der vorhergehenden Ansprüche, wobei das Metall ausgewählt ist aus der Gruppe von Aluminium, Silber, Zinn, Zink, Gold, Platin, Titan, Gold, Blei, Nickel und Tantal und/oder Legierungen oder Kombinationen davon.

12. Ein metallisiertes und decklackbeschichtetes Substrat, erhältlich gemäß dem Verfahren nach einem der Ansprüche 1 bis 11.

13. Verfahren zur Kontrolle der Homogenität der Beschichtung eines metallisierten decklackbeschichteten Substrates nach Anspruch 12, umfassend die Anregung der Beschichtung, welche ein Fluoreszenzmittel enthält, mit UV-Strahlung einer ersten Wellenlänge entsprechend der Anregungseigenschaften des in der Beschichtung vorliegenden Fluoreszenzmittels, um zu bewirken, dass die Beschichtung ein Licht mit einer längeren Wellenlänge als die Anregungsstrahlung emittiert, und Erfassen der Strahlung des von der Beschichtung emittierten Lichtes durch Inspektion oder durch Messung des emittierten Lichtes.

14. Verwendung eines Fluoreszenzmittels in einer Decklackschicht eines metallisierten beschichteten Substrats nach Anspruch 12 zur Kontrolle der Homogenität der Beschichtung, der Kontrolle der Kontinuität des Beschichtungsprozesses, und/oder der Chargenkontrolle und Antifälschungskontrolle.

## Revendications

1. Un processus de préparation d'un substrat de matériau tissé ou non tissé de type feuille à couche de finition métallisée et surimprimable composé d'un matériau à fibres tel que tissu, papier, carton ou tissu non tissé, comprenant les opérations suivantes :
a) le dépôt sur le substrat d'une couche de métal par dépôt sous vide, et
b) l'application d'un revêtement surimprimable sur le substrat métallisé obtenu en a), où le revêtement contient un agent fluorescent.

2. Un processus selon la revendication 1, comprenant en outre l'opération c) de surimpression de la couche de finition avec des insignes ou des motifs.

3. Un processus selon la revendication 2, comprenant en outre l'opération d) de découpage du substrat surimprimé de façon à former des étiquettes.

4. Un processus selon l'une quelconque des revendications précédentes, comprenant en outre l'opération d'application d'une composition adhésive sur la surface non métallisée du substrat.

5. Un processus selon les revendications 3 ou 4, comprenant en outre la fixation de l'étiquette à une bouteille de boisson.

6. Un processus selon l'une quelconque des revendications précédentes, où l'agent fluorescent est excitable par un rayonnement ultraviolet de façon à émettre de la lumière visible ou de la lumière ultraviolet d'une longueur d'onde plus longue que la longueur d'onde d'excitation.

7. Un processus selon l'une quelconque des revendications précédentes, où l'agent fluorescent contient un ou plusieurs éléments parmi benzoxazoline, biphénylestilbène, triazine-stilbène, diazole, triazole, coumarine et/ou imidazoline.

8. Un processus selon l'une quelconque des revendications précédentes, où l'agent fluorescent est présent dans une quantité de 0,01 à 0,1% en poids, en fonction de la composition de revêtement liquide totale.

9. Un processus selon l'une quelconque des revendications précédentes, où le substrat comprend des papiers couchés une face, des papiers siliconés, des papiers kraft ainsi que des papiers non couchés, hautement calandrés.

10. Un processus selon la revendication 9, où le substrat est préparé par un processus de métallisation sous vide poussé destiné à enduire la surface de substrat exposée avec une fine surface métallique ou un métal, et où le métal est vaporisé et déposé sur le substrat.

11. Un processus selon l'une quelconque des revendications précédentes, où le métal est sélectionné dans le groupe se composant d'aluminium, argent, étain, zinc, or, platine, titane, or, plomb, nickel et tantale, et/ou des alliages ou des combinaisons de ceux-ci.

12. Un substrat métallisé et à couche de finition pouvant être obtenu par le processus selon l'une quelconque des revendications 1 à 11.

13. Un processus destiné au contrôle de l'homogénéité de revêtement d'un substrat enduit métallisé selon la revendication 12, comprenant l'excitation du revêtement contenant un agent fluorescent avec un rayonnement ultraviolet d'une première longueur d'onde en fonction des caractéristiques d'excitation de l'agent fluorescent présent dans le revêtement de façon à amener le revêtement à émettre une lumière d'une longueur d'onde plus longue que le rayonnement d'excitation, et la détection du rayonnement de la lumière émise à partir du revêtement par inspection ou par mesure de la lumière émise.

14. L'utilisation d'un agent fluorescent dans une couche de finition d'un substrat enduit métallisé selon la revendication 12 pour le contrôle de l'homogénéité de revêtement, le contrôle de la continuité du processus de revêtement et/ou un contrôle de lots et anti-contrefaçon.
